# EUROPÄISCHE PATENTSCHRIFT

(11) **EP 4 344 920 B1**
(45) Veröffentlichungstag und Bekanntmachung des Hinweises auf die Patenterteilung: **28.01.2026**
(21) Anmeldenummer: 23198373.5
(22) Anmeldetag: 19.09.2023
(51) Int. Cl.: B60K 1/04, B60K 5/12, F16F 1/38

(54) **HALTESTRUKTUR**
SUPPORT STRUCTURE
STRUCTURE DE SUPPORT

(30) Priorität: 20.09.2022 DE 102022124154
(43) Veröffentlichungstag der Anmeldung: 03.04.2024
(73) Patentinhaber: Vibracoustic SE, 69469 Weinheim (DE)
(72) Erfinder: Schmidt-Sunnus, Rainer, 23562 Lübeck (DE); Rose, David, 22159 Hamburg (DE); Nitschke, Steffen, 21075 Hamburg (DE); Werner, Philipp, 21339 Lüneburg (DE); Renz, Daniel, 21339 Lüneburg (DE)
(74) Vertreter: Patentanwälte Olbricht Buchhold Keulertz

(56) Entgegenhaltungen:
- EP-A1- 4 272 986
- WO-A1-2022/106111
- US-A1- 2013 199 024
- US-A1- 2021 387 534

## Beschreibung

Die Erfindung betrifft eine Haltestruktur gemäß Anspruch 1.

Aus der Praxis sind Haltestrukturen bekannt, die Bauteile beispielsweise empfindliche Aggregate in Kraftfahrzeugen halten und beispielsweise an der Fahrzeugrahmenstruktur fixieren. Beispielsweise haben große Batterien für die E-Mobilität von Lastkraftwagen ein großes Eigengewicht. Ihre schwingungstechnische Entkopplung von der Karosserie stellt eine große Herausforderung an Elastomerlager dar, die in die Haltestruktur eingesetzt werden, beispielsweise in Aufnahmeaugen. Häufig kommen daher Elastomerlager großen Durchmessers zum Einsatz, welche in der Lage sind, große Wege auszugleichen, wie sie etwa bei der Verwindung der Fahrzeugrahmenstruktur auftreten können.

Solch große Elastomerlager benötigen jedoch auch zwangsläufig entsprechend große Aufnahmeaugen. Um die umgebenden Anbindungsstrukturen, etwa eine Fahrzeugrahmenstruktur, nicht mittels der notwendigen großen Aufnahmeaugen zu schwächen, aber auch um bei der geometrischen Anordnung der Lagerpunkte zwischen Elastomerlager und zu lagerndem Bauteil im Raum eine größere gestalterische Freiheit zu erreichen, können spezielle Lageraufnahmestrukturen als Zusatzelemente zum Einsatz kommen. Diese weisen mindestens ein großes Aufnahmeauge für mindestens ein Elastomerlager auf, sowie mindestens zwei Anschraubpunkte, an der die Lageraufnahmestruktur an die tragende umgebende Anbindungsstruktur, etwa eine Fahrzeugrahmenstruktur, angebunden wird.

Je nach geometrischer Anordnung der Anschraubpunkte in Relation zu dem mindestens einen Elastomerlager-Aufnahmeauge oder zu den mehreren Elastomerlager-Aufnahmeaugen entstehen an unterschiedlichen Stellen der Lageraufnahmestruktur große Biegemomente in der Ebene senkrecht zu Durchgangsbohrungen im Kern der Elastomerlager, durch welche die Verschraubungen geführt werden. Um eine möglichst hohe Biegesteifigkeit der Lageraufnahmen in den höchstbelastetsten Bereichen zu erreichen, wird üblicherweise möglichst viel Werkstoff in dieser Ebene konzentriert. Gleichzeitig jedoch führen Kräfte senkrecht zu dieser Ebene zu deren Durchbiegung oder Verwindung.

Bekannte Lageraufnahmestrukturen sind jedoch nicht derart ausgestaltet, dass sie durch kostengünstige Herstellung bei geringem Gewicht ausreichend biege- und verwindungssteif sind.

Die bekannte US 2021 387534 A1 betrifft eine Chassis Anordnung mit einer Haltestruktur.

Die Erfindung befasst sich mit der Verbesserung des oben genannten Standes der Technik.

Hauptmerkmale der Erfindung sind im kennzeichnenden Teil von Anspruch 1 angegeben. Ausgestaltungen sind Gegenstand der Ansprüche 2 bis 10.

Erfindungsgemäß wird eine Haltestruktur vorgeschlagen, umfassend mindestens ein Aufnahmeauge, welches eine zentrale Aufnahmeachse aufweist, mindestens zwei Fixierstellen, welche jeweils eine zentrale Fixierachse aufweisen, die parallel zu der mindestens einen Aufnahmeachse verläuft, eine erste Wandung und eine zweite Wandung, die an gegenüberliegenden Seiten der Haltestruktur angeordnet sind, wobei die beiden Wandungen in Richtung der mindestens einen Aufnahmeachse beabstandet sind, wobei sich das mindesten eine Aufnahmeauge von einer der Wandungen zur anderen Wandung erstreckt, wobei die Haltestruktur zudem zumindest einen Hohlraum aufweist, der zwischen den Wandungen angeordnet ist.

Die erfindungsgemäße Haltestruktur weist eine kostengünstig herstellbare Geometrie auf, beispielsweise ist die Haltestruktur mittels eines Gießverfahrens herstellbar. Zudem lässt die erfindungsgemäße Haltestruktur nicht zuletzt aufgrund der Wandungen und Anordnung der Achsen lediglich geringe Auslenkungen aufgrund von axial und radial auf ein einsetzbares Elastomerlager einwirkenden Kräften zu. Insbesondere weist die erfindungsgemäße Haltestruktur eine hohe Biegesteifigkeit und auch eine hohe Torsionssteifigkeit auf. Letztere Steifigkeit wird für den Fall benötigt, dass in ein einsetzbares Elastomerlager Kardanikmomente eingeleitet werden. Dabei sind Kardanikmomente am kritischsten um die Achse / die Strecken, welche das einsetzbare Elastomerlager mit der/den Fixierstelle(n) auf dem kürzesten Weg verbinden.

Um die Haltestruktur gegen ein Verdrehen relativ zu einer Anbindungsstruktur zu sichern, etwa gegenüber einer Fahrzeugrahmenstruktur, an welcher die Haltestruktur fixierbar ist, muss diese über mindestens zwei Fixierstellen fixierbar sein, beispielsweise verschraubbar sein. Daher umfasst die Haltestruktur mindestens zwei Fixierstellen. Eine Fixierstelle kann eine Durchgangsbohrung in der Haltestruktur sein. Sie kann begrenzt sein von einem Zylinderabschnitt, der aus dem Material der Haltestruktur gebildet ist. Die Fixierstelle kann jedoch auch eine Fixierhülse mit einer Durchgangsbohrung sein, wobei sie materialverschieden zum Material der Haltestruktur sein kann.

Darüber hinaus weist die Haltestruktur zumindest ein Aufnahmeauge auf, in welches ein Elastomerlager einsetzbar ist. Das Aufnahmeauge kann durchgehend sein.

Durch diese erfindungsgemäße Ausgestaltung können Radiallasten im einsetzbaren Elastomerlager in geeigneter Weise auf die Fixierstellen übertragen werden. Insbesondere werden Biegemomente übertragen, also Momente um die Axialrichtung der zumindest einen Aufnahmeachse und der zumindest zwei Fixierachsen. Hierzu dienen die beiden Wandungen, um Biegemomente um die zumindest eine Aufnahmeachse zu übertragen. Um nämlich möglichst hohe Biegemomente in einer Ebene parallel oder identisch zu zumindest einer der Wandungen übertragen zu können, sind möglichst viele flächige Strukturen in der Ebene und parallel dazu anordenbar. Daher dienen die axial beabstandeten Wandungen der Übertragung solcher Biegemomente. Dieser geometrische Zusammenhang kann auch beschrieben sein dadurch, dass der Normalenvektor der jeweiligen Ebene oder Ebene, in der sich die jeweilige Wandung erstreckt (Wandungsebene), parallel zu den Fixierachsen und der zumindest einen Aufnahmeachse verläuft. Die Ebene, in der eine Wandung oder eine Innenwandung liegt, kann als Wandungsebene bezeichnet sei.

Die erfindungsgemäße Haltestruktur eignet sich nicht nur zur Übertragung hoher Biegemomente in einer Ebene parallel oder identisch zu zumindest einer der Wandungen, sie ist zugleich auch bei minimalem Materialeinsatz kostengünstig herstellbar. Die erfindungsgemäße Geometrie lässt nämlich eine Herstellung mittels eines Gießverfahrens zu, bei dem Schieber in eine Gießform einragen können, um die Hohlräume zur Materialreduzierung herzustellen.

Gemäß einer denkbaren Ausgestaltung der erfindungsgemäßen Haltestruktur ist der zumindest eine Hohlraum von beiden Wandungen begrenzt. Er kann also als Wandungshohlraum bezeichnet sein. Der Wandungshohlraum kann entlang seines Verlaufs eine Längsrichtung aufweisen. Diese Längsrichtung kann parallel zu der/den Wandung(en) und/oder Innenwandung verlaufen. Der Wandungshohlraum kann an zumindest einer Seite zur Umgebung der Haltestruktur offen sein. Diese offene Seite liegt nicht innerhalb einer Wandung; vielmehr kann sich der Wandungshohlraum im Zwischenbereich der beiden Wandungen öffnen.

Gemäß einer denkbaren Ausgestaltung der erfindungsgemäßen Haltestruktur sind die beiden Wandungen außenseitig an der Haltestruktur angeordnet. Sie können daher auch als Außenwandungen bezeichnet sein. Dadurch können sie weitest möglich in Axialrichtung beabstandet sein, um ausgewogene Steifigkeiten um die verschiedenen Achsen herzustellen.

Gemäß einer denkbaren Ausgestaltung der erfindungsgemäßen Haltestruktur kann zwischen den Wandungen eine Innenwandung angeordnet sein, die parallel zu zumindest einer der beiden Wandungen verläuft. Dadurch können sogar drei Wandungen oder flächige Strukturen ausgebildet werden, deren jeweilige Ebene, in der sie angeordnet sind, allesamt senkrecht von den Fixierachsen und der zumindest einen Aufnahmeachse durchlaufen werden können. Dies führt zu einer hohen Steifigkeit gegen Biegemomente um die zumindest eine Aufnahmeachse.

Gemäß einer denkbaren Ausgestaltung der erfindungsgemäßen Haltestruktur sind die Wandungen und/oder ist die Innenwandung eben ausgestaltet und erstreckt/erstrecken sich in einer jeweiligen Ebene. Dadurch können die Biegemomente in der jeweiligen Wandung bestmöglich übertragen werden.

Gemäß einer denkbaren Ausgestaltung der erfindungsgemäßen Haltestruktur sind die jeweiligen Ebenen (Wandungsebenen), in welchen sich die Wandungen oder die Wandungen und die Innenwandung erstrecken, parallel zueinander. Dadurch können die Biegemomente in den Wandungen bestmöglich übertragen werden.

Gemäß einer denkbaren Ausgestaltung der erfindungsgemäßen Haltestruktur sind jeweiligen Ebenen (Wandungsebenen), in welchen sich die Wandungen erstrecken, winklig zueinander, wobei sie einen Winkel im Bereich von 0,1 bis 20° einschließen können. Ein zwischen einer Wandung und der Innenwandung eingeschlossener Winkel kann die halbe Winkelgröße aufweisen. Dadurch kann eine Haltestruktur geschaffen werden, die sich an Bauraumgrenzen anpassen kann und/oder aufgrund der grundsätzlich schräg zulaufenden Gestalt weiter Material einsparen kann.

Gemäß einer denkbaren Ausgestaltung der erfindungsgemäßen Haltestruktur kann diese mehrere Aufnahmeaugen umfassen, wobei die Aufnahmeachsen aller Aufnahmeaugen parallel zueinander verlaufen können. Diese Ausgestaltung zeigt das Erfindungspotential auf, so dass auch große und oder verschiedene Biegemomente, die von in den Aufnahmeaugen einsetzbaren Elastomerlagern eingetragen werden, sicher und dauerhaft übertragen werden können.

Gemäß einer weiteren Ausgestaltung der erfindungsgemäßen Haltestruktur kann zwischen den Wandungen zumindest eine Rippe, vorzugsweise mehrere Rippen, angeordnet sein. Die zumindest eine Rippe kann die beiden Wandungen direkt oder geradlinig indirekt über die Innenwandung miteinander verbinden. Die zumindest eine Rippe kann entlang ihres Verlaufs eine Längsrichtung aufweisen, vorzugsweise parallel zu zumindest einer der Wandungen. Die zumindest eine Rippe kann eine Erstreckung in Richtung der mindestens einen Aufnahmeachse aufweisen, die größer ist als eine Erstreckung in eine Richtung, die quer dazu und zu Ihrer Längsrichtung liegt. Die zumindest eine Rippe kann in einer Ebene, oder Rippenebene liegen, welche senkrecht zu der/den Ebene(n) oder Wandungsebene der/den Wandung(en) oder zusätzlich der Innenwandung ausgerichtet ist. Dadurch bildet sie eine Struktur aus, die rechtwinklig zu den Wandungen angeordnet sein kann, um diese stabil miteinander zu verbinden, insbesondere gegen Kräfte quer zu den Wandungsebenen.

Gemäß einer denkbaren Ausgestaltung der erfindungsgemäßen Haltestruktur kann die zumindest eine Rippe einen geraden Verlauf aufweisen. Hierdurch kann die entsprechende Rippe einen signifikanten Beitrag zur Steifigkeit der Haltestruktur in ihrer Längsrichtung leisten.

Gemäß einer denkbaren Ausgestaltung der erfindungsgemäßen Haltestruktur kann die zumindest eine Rippe deckungsgleich mit oder parallel zu einer Verbindungsstrecke des Verbindungsdreiecks verlaufen. Diese Rippe kann als Direktverbindungsrippe bezeichnet sein. Die Rippe bzw. Direktverbindungsrippe verbindet Krafteinleitungspunkte unmittelbar miteinander. Je weniger abweichend die Rippe(n) in Bezug auf die Krafteinleitungspunkte oder die Verbindungsstrecke angeordnet ist/sind, desto weniger Verwindung wird induziert.

Gemäß einer weiteren Ausgestaltung der erfindungsgemäßen Haltestruktur können drei Achsen, ausgewählt aus der Gruppe umfassend Aufnahmeachse(n), Fixierachsen und resultierende Fixierachse, mindestens ein Verbindungsdreieck definieren, wobei der zumindest eine Hohlraum in das Verbindungsdreieck einragen kann, vorzugsweise in eine Richtung einragen kann, die senkrecht zu der zumindest einen Aufnahmeachse ist. Das Verbindungsdreieck ist eine gedachte Geometrieform. Denkbar ist, dass die Gruppe zumindest eine Aufnahmeachse umfasst, vorzugsweise zwei Aufnahmeachsen. Beim Einragen kann der entsprechende Hohlraum zumindest eine Seite des Verbindungsdreiecks durchragen. Die Längsrichtung des Hohlraums kann parallel zu zumindest einer Wandungsebene verlaufen.

Die Aufnahmeachse(n) und die Fixierachsen können geometrisch mittels Verbindungsstrecken verbunden werden. Jeweils drei Verbindungsstrecken können somit das Verbindungsdreieck ausbilden. Vorzugsweise liegt das Verbindungsdreieck in einer Ebene parallel zu zumindest einer Wandung/Innenwandung oder liegt gar in einer Wandung/Innenwandung, bzw. der jeweiligen Wandungsebene.

Eine resultierende Fixierachse ergibt sich als geometrisches Mitte aus einer Gruppe einzelner Fixierachsen der jeweiligen Fixierstellen. Mehrere Fixierstellen können eine Fixiergruppe bilden. Eine Fixiergruppe kann entweder genau drei oder genau zwei Fixierstellen umfassen.

Bei drei Fixierstellen sind diese derart zueinander beabstandet sind, dass deren Fixierachsen ein Dreieck oder Fixiergruppendreieck definieren. Bei dem Fixiergruppendreieck kann die kürzeste Seitenlänge mindestens 80% der längsten Seitenlänge betragen. Zusätzlich oder alternativ ist keine der drei Seitenlängen länger als 100 mm. Die sich ergebende geometrische Mitte kann der Schwerpunkt des Fixiergruppendreiecks im mathematischen Sinne sein.

Bei einer Fixiergruppe aus genau zwei Fixierstellen kann der Abstand zwischen den jeweiligen Fixierachsen maximal 100 mm betragen. Die sich ergebende geometrische Mitte kann der Mittelpunkt auf einer Verbindungsgeraden zwischen den genau zwei Fixierachsen sein.

Für den Fall, dass die Haltestruktur genau eine Aufnahmeachse und genau zwei Fixierachsen aufweist, bilden die zwei Fixierachsen keine resultierende Fixierachse aus, da in diesem Fall kein Verbindungsdreieck definierbar wäre. Durchaus denkbar ist, dass ein Fixierpunkt zu unterschiedlichen Fixiergruppen gezählt werden kann, sofern er die obigen Kriterien der Fixiergruppe erfüllt.

Ein Verbindungsdreieck kann beispielsweise zwischen zwei Fixierachsen oder zwei resultierenden Fixierachsen und einer Aufnahmeachse gebildet sein. Es kann jedoch beispielsweise auch zwischen einer Fixierachse oder einer resultierenden Fixierachse und zwei Aufnahmeachsen gebildet sein.

Dadurch, dass der Hohlraum in das Verbindungsdreieck einragt, ist ein tiefes Einragen verwirklichbar, welches zu erheblicher Materialeinsparung ohne negative Einflüsse auf die Stabilität führt. Überraschenderweise führen derartige Hohlräume zu einer Haltestruktur, welche nicht nur eine hohe Biegesteifigkeit (durch Radiallasten in Elastomerlager(n)) in der/den Wandungsebene(n) aufweist, sondern auch zu einem besonders ausgewogenen Verhältnis von geringen Verformungen aufgrund von Lasten in Axialrichtung mit unterschiedlichen Vorzeichen (= hohe Torsions- bzw. Verwindungssteifigkeiten) und geringen Verformungen aufgrund von Lasten in Axialrichtung mit gleichen Vorzeichen (= hohe Biegesteifigkeiten senkrecht zur Schalenebene) führt.

Gemäß einer weiteren Ausgestaltung der erfindungsgemäßen Haltestruktur kann die Einragestrecke, über die der zumindest eine Hohlraum in das Verbindungsdreieck einragt, im Bereich der 1,0-fachen bis 0,1-fachen Höhe des Verbindungsdreiecks liegen, vorzugsweise im Bereich der 0,9-fachen bis 0,1-fachen Höhe liegen, weiter bevorzugt im Bereich der 0,9-fachen bis 0,5-fachen Höhe liegen. Die Höhe des Verbindungsdreiecks definiert sich über diejenige Seite des Verbindungsdreiecks, welche vom Hohlraum durchragt wird. Dadurch können tiefe Hohlräume quantifiziert werden.

Gemäß der erfindungsgemäßen Haltestruktur ist zumindest eine der Fixierstellen, in einer weiteren Ausgestaltung vorzugsweise eine Mehrheit der Fixierstellen, noch weiter bevorzugt alle der Fixierstellen, von beiden Wandungen getragen oder daran angebunden. Bevorzugt erstreckt sich ein Hohlraum, vorzugsweise ein Wandungshohlraum, an mindestens eine Fixierstelle/eine Fixiergruppe in der Art heran, dass mindestens in Richtung einer Verbindungsstrecke beide Wandungen in die Fixierstelle übergehen können. Hierdurch ist eine besonders torsionssteife Anbindung der Fixierstelle an die Haltestruktur möglich, wobei die Torsionsrichtung um die Axialrichtung, also Torsion in oder parallel zu zumindest einer Wandungsebene relevant wird.

Gemäß einer weiteren Ausgestaltung der erfindungsgemäßen Haltestruktur kann sie zumindest eine Abflussöffnung umfassen ist, die fluidisch mit zumindest einem der Hohlräume verbunden ist und zu einer Umgebung der Haltestruktur führt oder zu einem anderen der Hohlräume führt. Dadurch ist verhindert, dass im Betrieb die Hohlräume schöpfend wirken, was zu Frostschäden bei Auffrieren durch Ausdehnung durch Eiskristallbildung führen kann. Vielmehr kann Wasser, beispielsweise Regenwasser oder Spritzwasser, durch die Haltestruktur schwerkraftbedingt abfließen. Somit wird eine Beschädigung der Haltestruktur durch Einfrieren des Wassers vermieden. Denkbar ist, dass die Abflussöffnung von der Innenwandung ausgebildet ist. Aufgrund ihrer mittigen Anordnung kann Fluid daher vorteilhaft in die Mitte geleitet werden. Denkbar ist, dass die Abflussöffnung entlang ihrer Längsrichtung einen zulaufenden Verlauf aufweist. Dadurch kann sie trichterartig anfallendes Fluid bestmöglich führen.

Gemäß einer weiteren Ausgestaltung der erfindungsgemäßen Haltestruktur kann die zumindest eine Rippe derart angeordnet sein, dass sie mindestens zwei der Hohlräume im Inneren des Verbindungsdreiecks trennt und mindestens zwei der Hohlräume außerhalb des Verbindungsdreiecks trennt. Alternativ kann die zumindest eine Rippe derart angeordnet sein, dass sie zwei der Hohlräume im Inneren des Verbindungsdreiecks und diese Hohlräume auch außerhalb des Verbindungsdreiecks trennt. Je mehr Rippen zwischen den Wandungen vorgesehen sind, desto verwindungssteifer ist die Haltestruktur, jedoch kann sie dadurch entsprechend schwerer werden.

Gemäß einer denkbaren Ausgestaltung der erfindungsgemäßen Haltestruktur umfasst diese zumindest einen weiteren Hohlraum, der stirnseitig von einer der Wandungen oder der Innenwandung begrenzt ist und an zumindest einer Seite zur Umgebung der Haltestruktur offen ist, wobei diese offene Seite in einer der beiden Wandungen liegt. Die offene Seite kann der Wandungen oder der Innenwandung gegenüberliegen. Sofern eine der Wandungen die geschlossene Stirnseite ausbildet, bildet diese Wandung nicht auch die offene Seite aus, sondern die andere der Wandungen. Die Längsrichtung dieses Hohlraums entlang seines Verlaufs ist somit senkrecht oder im Wesentlichen senkrecht zu zumindest einer Wandungsebene ausgerichtet. Der Hohlraum kann als Querungshohlraum bezeichnet sein. Die Längsrichtung des Querungshohlraums oder der Querungshohlräume kann/können in vorteilhafter Weise zur Längsrichtung des Wandungshohlraums oder der Wandungshohlräume rechtwinklig ausgerichtet sein. Dadurch sind Hohlräume (Wandungshohlraum und Querungshohlraum) in der Haltestruktur ausbildbar, die aus unterschiedlichen Raumrichtungen in die Haltestruktur einragen, insbesondere zur Reduzierung von Material.

Gemäß einer denkbaren Ausgestaltung der erfindungsgemäßen Haltestruktur können sich zumindest zwei Querungshohlräume bezüglich der Innenwandung gegenüberliegen. Je spiegelsymmetrischer die Haltestruktur zu einer Gesamtmittelebene oder der Innenwandung ausgebildet ist, desto weniger Biegemomente werden durch Radiallasten (einleitbar in die Aufnahmeaugen oder Fixierstellen) in die Haltestruktur induziert.

Gemäß einer denkbaren Ausgestaltung der erfindungsgemäßen Haltestruktur ist diese spiegelsymmetrisch bezüglich der Innenwandung ausgebildet. Die Innenwandung ist mit Vorteil sodann zentral angeordnet, wodurch mehr Steifigkeit erzeugt wird.

Gemäß einer denkbaren Ausgestaltung der erfindungsgemäßen Haltestruktur kann eine Rippe einen Wandungshohlraum von einem Querungshohlraum trennen. So können lokale Steifigkeitsanforderungen an die Haltestruktur bestmöglich konstruktiv realisiert werden.

Gemäß einer weiteren Ausgestaltung der erfindungsgemäßen Haltestruktur kann die zumindest eine Rippe die längste Seite des Verbindungsdreiecks überragen. Hierdurch wird die Torsionssteifigkeit um die längste der drei Seiten des Verbindungsdreiecks erhöht. Da es sich um die längste der drei Seiten des Verbindungsdreiecks handelt, ist eine Struktur im Bereich dieser längsten Seite bezüglich der Torsionssteifigkeit nachgiebiger als in Bereichen der beiden anderen Seiten, so dass eine Versteifung besonders vorteilhaft sein kann. Besonders vorteilhaft überragen mehrerer Rippen die längste der drei Seiten des Verbindungsdreiecks.

Gemäß einer weiteren Ausgestaltung der erfindungsgemäßen Haltestruktur kann die zumindest eine Rippe derart angeordnet sein, dass sie sich in Richtung auf eine der Fixierstellen oder auf eine von Fixierstellen gebildeten Fixiergruppe erstreckt. Durch diese Anordnung können Biegemomente, welche zumindest eine Wandungsebene queren, besonders gut aufgenommen werden.

Gemäß einer weiteren Ausgestaltung der erfindungsgemäßen Haltestruktur kann sie einstückig ausgebildet sein, vorzugsweise als Gussteil, oder aus einem einstückigen Teil mit zumindest zwei Fixierhülsen. Sie kann als Gussteil beispielsweise per Aluminium-Druckguss oder Kunststoffspritzguss herstellbar sein. Vorteilhaft daran ist die Möglichkeit der Verwendung von sog. Schiebern, die in die Gießform einragen können, um die Hohlräume herzustellen. Dadurch können Querschieber verwendet werden, die die Querungshohlräume ausbilden und Wandungsschieber verwendet werden, welche die Wandungshohlräume ausbilden. Denkbar ist auch, dass für die Querungshohlräume keine Querschieber verwendet werden, sondern die jeweilige Geometrie durch die Gießform selbst abgebildet wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

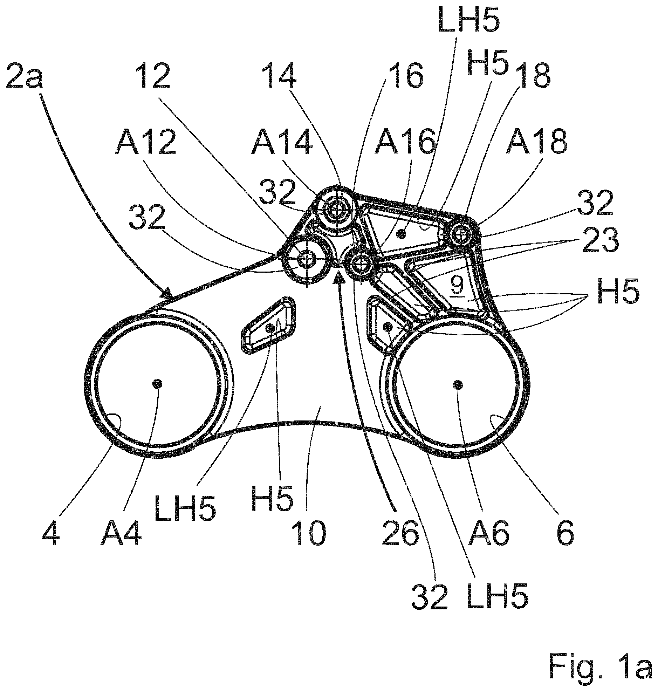

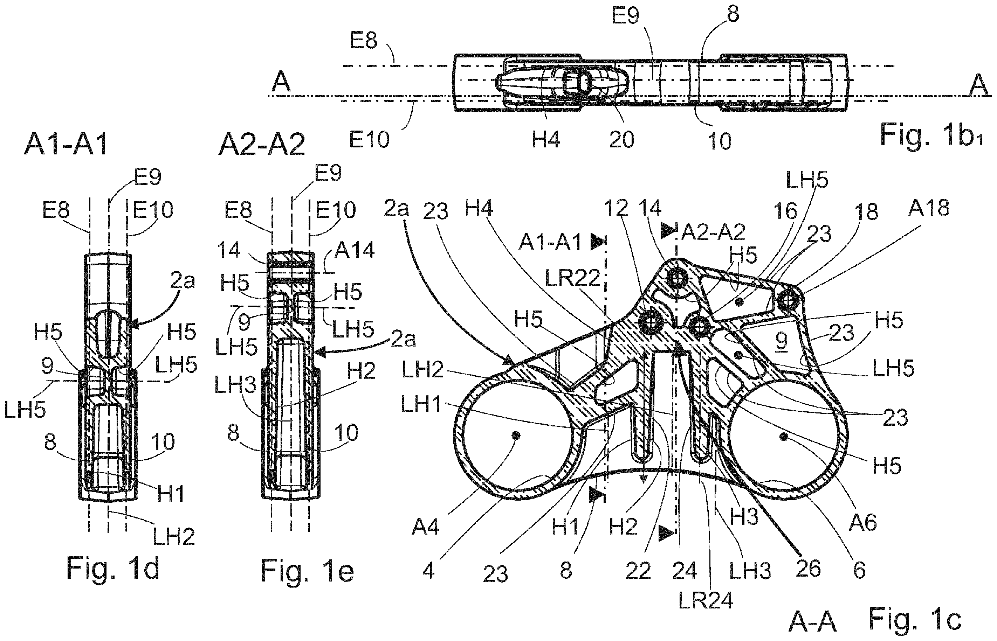

- Fig. 1a: eine Seitenansicht einer erfindungsgemäßen Haltestruktur erster Ausführung;

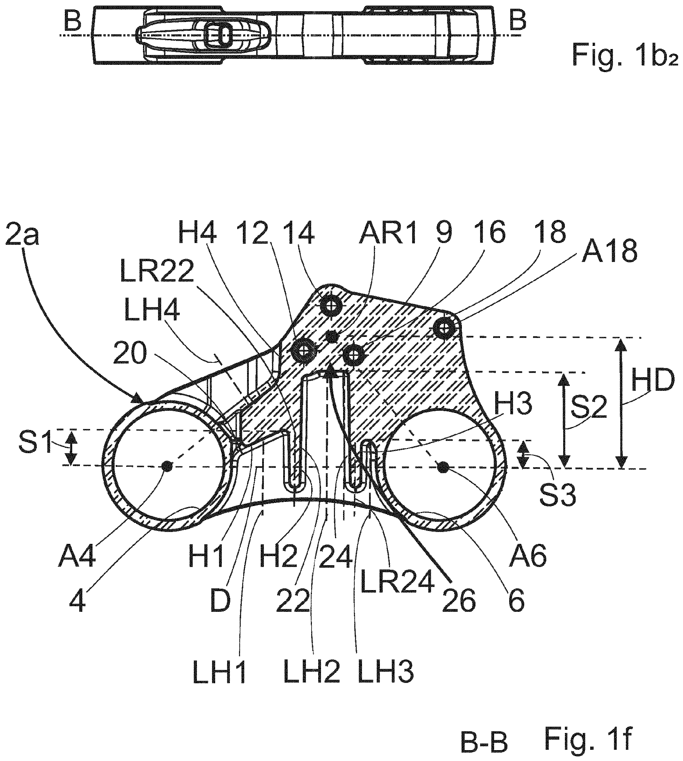

- Fig. 1b1: eine Draufsicht auf die Haltestruktur nach Fig. 1a,
- Fig. 1b2: eine Draufsicht auf die Haltestruktur nach Fig. 1a,
- Fig. 1c: eine Schnittansicht durch die Haltestruktur nach Fig. 1a entlang der Linie A-A gemäß Fig. 1b1,
- Fig. 1d: eine Schnittansicht durch die Haltestruktur nach Fig. 1a entlang der Linie A1-A1 gemäß Fig. 1c,
- Fig. 1e: eine Schnittansicht durch die Haltestruktur nach Fig. 1a entlang der Linie A2-A2 gemäß Fig. 1c,
- Fig. 1f: eine Schnittansicht durch die Haltestruktur nach Fig. 1a entlang der Linie B-B gemäß Fig. 1b2,
- Fig. 2a: eine Seitenansicht einer erfindungsgemäßen Haltestruktur zweiter Ausführung;
- Fig. 2b: eine Draufsicht auf die Haltestruktur nach Fig. 2a,
- Fig. 2c: eine Schnittansicht durch die Haltestruktur nach Fig. 2a entlang der Linie A-A gemäß Fig. 2b,
- Fig. 2d: eine Schnittansicht durch die Haltestruktur nach Fig. 2a entlang der Linie B-B gemäß Fig. 2b,
- Fig. 3a: eine Seitenansicht einer erfindungsgemäßen Haltestruktur dritter Ausführung;
- Fig. 3b: eine Draufsicht auf die Haltestruktur nach Fig. 3a,
- Fig. 3c: eine Schnittansicht durch die Haltestruktur nach Fig. 3a entlang der Linie A-A gemäß Fig. 3b und
- Fig. 3d: eine Schnittansicht durch die Haltestruktur nach Fig. 3a entlang der Linie B-B gemäß Fig. 3b.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Der erste Figurensatz (Figuren 1a, 1b1, 1b2, 1c, 1d, 1e, 1f) zeigt eine Haltestruktur 2a erster Ausführung in verschiedenen Ansichten, welche nachstehend insgesamt beschrieben werden. Die Fig. 1b1 und 1b2 sind grundsätzlich identisch, zeigen jedoch unterschiedliche Schnittebenen (A-A, B-B) an, die sich aus Gründen der Übersichtlichkeit nicht in einer Figur 1b haben darstellen lassen.

Die Haltestruktur 2a ist als Gussteil ausgebildet und umfasst vier Fixierhülsen 32. Jede der Hülsen 32 weist eine Durchgangsbohrung auf, durch welche eine Schraube zur Fixierung der Haltstruktur 2a an einer Anbindungsstruktur, etwa einer Fahrzeugrahmenstruktur, durchgeführt werden kann. Jede der Hülsen 32 definiert eine Fixierstelle 12, 14, 16, 18 und weist eine zentrale Fixierachse A12, A14, A16, A18 auf. Die Haltestruktur 2a umfasst zudem zwei Aufnahmeaugen 4, 6, welche jeweils eine zentrale Aufnahmeachse A4, A6 aufweisen. Die Fixierachsen A12, A14, A16, A18 und die Aufnahmeachsen A4, A6 verlaufen parallel zueinander.

Die Haltestruktur 2a umfasst zudem eine erste Wandung 8, die sich in einer Ebene E8 oder Wandungsebene erstreckt. Sie umfasst zudem eine zweite Wandung 10, die sich in einer Ebene E10 oder Wandungsebene erstreckt. Die Wandungen 8, 10 sind außenseitig an der Haltestruktur 2a und an gegenüberliegenden Seiten der Haltestruktur 2a angeordnet; sie können also auch als Außenwandung bezeichnet sein. In Richtung der Aufnahmeachsen A4, A6 sind die beiden Wandungen 8, 10 beabstandet zueinander. In deren Zwischenraum umfasst die Haltestruktur 2a zudem eine mittig angeordnete Innenwandung 9, die sich in einer Ebene E9 oder Wandungsebene erstreckt, dargestellt in der Schnittansicht von Fig. 1f durch diese Innenwandung 9. Die Wandungen 8, 9, 10 und deren Ebenen E8, E9, E10 verlaufen parallel zueinander. Die Fixierstellen 12, 14, 16, 18 sind von den beiden Wandungen 8, 10 getragen.

Die Aufnahmeaugen 4, 6 erstrecken sich durchgehend von der einen Wandung 8 zur anderen Wandung 10 und durch die Wandungen 8, 9, 10 hindurch. Die Aufnahmeaugen 4, 6 sind somit beidends offen. Die Fixierachsen A12, A14, A16, A18 und die Aufnahmeachsen A4, A6 verlaufen senkrecht zu den Ebenen E8, E9, E10.

Die Haltestruktur 2a umfasst nun zudem diverse Hohlräume. Eine erste Gruppe umfasst Hohlräume H1, H2, H3, H4, die auch als Wandungshohlräume bezeichenbar sind. Die Hohlräume H1, H2, H3, H4 sind zwischen den Wandungen 8, 10 angeordnet, wobei jeder diese Hohlräume H1, H2, H3, H4 von beiden Wandungen 8, 10 begrenzt ist. Jeder der Hohlräume H1, H2, H3, H4 weist entlang seines Verlaufs eine Längsrichtung LH1, LH2, LH3, LH4 auf, wobei alle Längsrichtungen LH1, LH2, LH3, H4 der Hohlräume H1, H2, H3, H4 parallel zu den Wandungen 8, 10 und der Innenwandung 9 verlaufen. Jeder der Hohlräume H1, H2, H3, H4 ist an zumindest einer Seite zur Umgebung der Haltestruktur 2a offen, wobei diese offene Seite nicht innerhalb einer Wandung 8, 10 liegt, sondern vielmehr im Zwischenbereich der beiden Wandungen 8, 10.

Zwischen den zwei benachbarten Hohlräumen H1, H4 ist eine trichterförmige Abflussöffnung 20 von der Innenwandung 9 ausgebildet, welche die beiden Hohlräume H1, H4 fluidisch miteinander verbindet.

Die Haltestruktur 2a umfasst zudem eine zweite Gruppe an Hohlräumen H5, welche als Querungshohlräume bezeichenbar sind. Jeder der Hohlräume H5 ist stirnseitig von der Innenwandung 9 begrenzt und an seiner gegenüberliegenden Seite zur Umgebung der Haltestruktur 2a offen, wobei diese offene Seite in der entsprechenden Wandung 8, 10 liegt. Jeder der Hohlräume H5 weist entlang seines Verlaufs eine Längsrichtung LH5 auf, wobei alle Längsrichtungen LH5 senkrecht zu den Wandungen 8, 10 und der Innenwandung 9 verlaufen. Auch zu den Längsrichtungen LH1, LH2, LH3, H4 der Hohlräume H1, H2, H3, H4 sind die Längsrichtungen LH5 der Hohlräume H5 rechtwinklig ausgerichtet. Erkennbar ist, dass sich jeweils zwei Querungshohlräume H5 bezüglich der Innenwandung 9 gegenüberliegen, beispielsweise zu sehen in Fig. 1e.

Zwischen den Wandungen 8, 10 sind geradlinig verlaufende Rippen 22, 23, 24 angeordnet, welche die beiden Wandungen indirekt aber in Axialrichtung geradlinig über die Innenwandung 9 miteinander verbinden. Jede der Rippen 22, 23, 24 weist eine Längsrichtung LR22, LR23, LR24 auf. Ersichtlich ist, dass jede der Rippen 22, 23, 24 in Richtung der Aufnahmeachsen A4, A6 jeweils eine Erstreckung aufweist, die größer ist als eine Erstreckung in eine Richtung ist, die quer dazu und quer zu Ihrer Längsrichtung LR22, LR23, LR24 liegt. Die Rippen 23 können als Direktverbindungsrippen bezeichnet sein, da sie Krafteinleitungspunkte in Aufnahmeaugen 4, 6 und Fixierstellen 12, 14, 16, 18 oder Fixiergruppen 26, 28 direkt verbinden. Die Direktverbindungsrippen erstrecken sich somit zwischen zwei von Aufnahmeaugen 4, 6, Fixierstellen 12, 14, 16, 18 und Fixiergruppen 26, 28.

Insbesondere Fig. 1c zeigt, dass die Rippe 24 den Hohlraum H2, der ein Wandungshohlraum sein kann, von einem Hohlraum H5 trennt, der ein Querungshohlraum sein kann. Zu sehen ist dort auch, dass sich die Rippe 22 in Richtung der Fixierstelle 12 erstreckt und sich die Rippe 24 in Richtung der Fixierstelle 16 erstreckt.

Fig. 1f zeigt nun diverse Geometriebeziehungen in der Haltestruktur 2a. Die Fixierstellen 12, 14 und 16 definieren eine Fixiergruppe 26. Aus den jeweiligen Fixierachsen A12, A14 und A16 ergibt sich als mathematischer Schwerpunkt aus einem von den Fixierachsen A12, A14 und A16 gebildeten Dreieck eine resultierende Fixierachse AR1. Gedanklich kann nun zwischen der resultierende Fixierachse AR1, der Aufnahmeachse A4 und der Aufnahmeachse A6 ein Verbindungsdreieck D aufgespannt werden. Das Verbindungsdreieck D weist drei Seiten auf.

Ersichtlich ist, dass jeder der Hohlräume H1, H2, H3, H4 in das Verbindungsdreieck D einragt, wobei jede Einragerichtung S1, S2, S3, S4 senkrecht zu den Aufnahmeachsen A4, A6 ist. Die Einragestrecken S1, S2, S3, S4 entlang der jeweiligen Längsrichtung LH1, LH2, LH3, LH4 in das Verbindungsdreieck D hinein sind unterschiedlich lang, wobei der Hohlraum H2 am weitesten in das Verbindungsdreieck D einragt. Die Einragestrecke S2 des Hohlraums H2 beträgt hier etwa der 0,8-fachen Höhe HD des Verbindungsdreiecks D über der Seite, die vom Hohlraum H2 durchragt wird. Die Hohlräume H5 ragen nicht in dieses Verbindungsdreieck D ein, denn sie queren keine der Seiten des Verbindungsdreiecks D.

In der Zusammenschau von Fig. 1c und 1f ist ersichtlich, dass die Rippe 22 innerhalb des Verbindungsdreiecks D einen Hohlraum H5 und den Hohlraum H1 vom Hohlraum H2 trennt und außerhalb des Verbindungsdreiecks D den Hohlraum H1 vom Hohlraum H2. In der Zusammenschau von Fig. 1c und 1f ist ersichtlich, dass die Rippe 24 die Hohlräume H2 und H3 sowohl innerhalb wie auch außerhalb des Verbindungsdreiecks D trennt. Ersichtlich ist zudem, dass die Rippen 22, 24 die längste der drei Seiten des Verbindungsdreiecks D überragen.

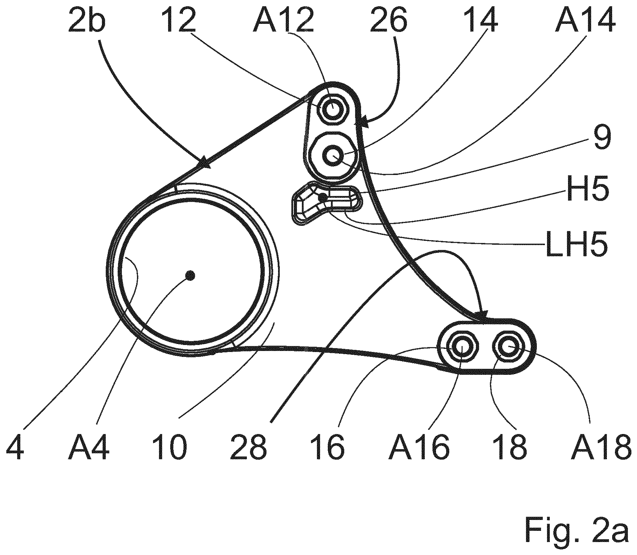

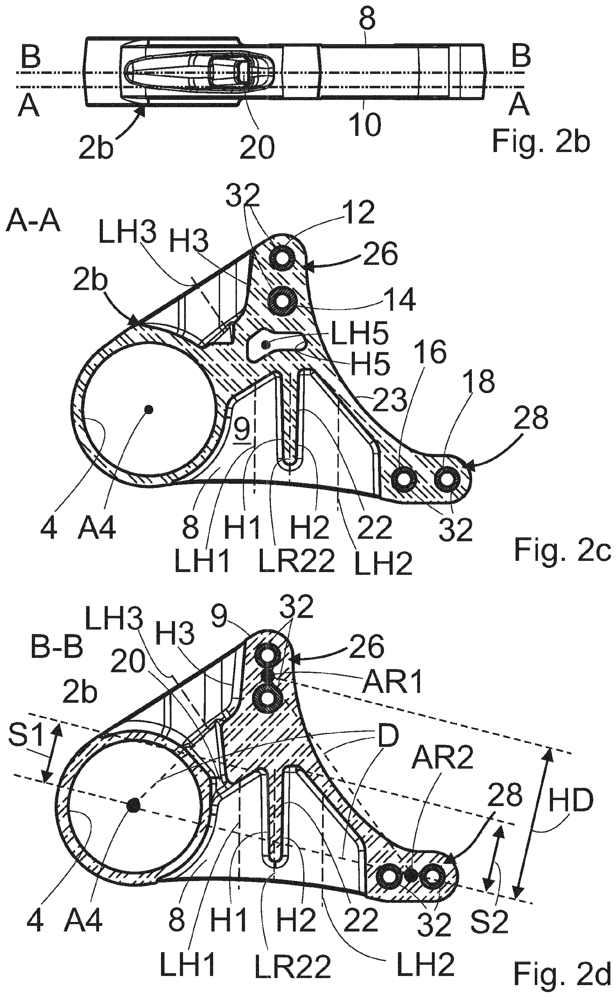

Zur Vermeidung von Wiederholungen sollen nachstehend vom zweiten Figurensatz (Figuren 2a, 2b, 2c, 2d) lediglich die grundsätzlichen Unterschiede zum ersten Figurensatz beschrieben werden. Nicht beschriebene Merkmale sollen gleichsam als offenbart und beschrieben gelten.

Der zweite Figurensatz (Figuren 2a, 2b, 2c, 2d) zeigt eine Haltestruktur 2b zweiter Ausführung in verschiedenen Ansichten, welche nachstehend insgesamt beschrieben werden.

Die Haltestruktur 2b umfasst nun ein einziges Aufnahmeauge 4 mit Aufnahmeachse A4. Es sind zwar weiterhin vier Fixierstellen 12, 14, 16, 18 vorhanden, jedoch sind sie abweichend arrangiert. Die ersten beiden Fixierstellen 12 und 14 definieren die erste Fixiergruppe 26 mit resultierender Fixierachse AR1 und die beiden anderen Fixierstellen 16 und 18 definieren nun eine weitere Fixiergruppe 28 mit resultierender Fixierachse AR2. Die sich ergebende geometrische Mitte für die resultierender Fixierachse AR2 ist der Mittelpunkt auf einer Verbindungsgeraden zwischen den genau zwei Fixierachsen A16, A18. Somit ist das Verbindungsdreieck D ausgebildet zwischen den Fixierachsen AR1, AR2 und der Aufnahmeachse A4.

Die Haltestruktur 2b weist nunmehr nur drei Hohlräume H1, H2, H3 bzw. Wandungshohlräume und nur ein Paar von sich bezüglich der Innenwandung 9 gegenüberliegenden Hohlräumen H5 bzw. Querungshohlräumen auf. Die Abflussöffnung 20 ist ausgebildet zwischen den Hohlräumen H1 und H3. Die beiden Hohlräume H1, H3 sind von der Rippe 22 innerhalb und außerhalb des Verbindungsdreiecks D getrennt. Die Einragestrecken S1, S2, der Hohlräume H1, H2 sind nun in etwa gleich lang, wobei der Hohlraum H2 am weitesten einragt, um etwa die halbe Höhe HD des Verbindungsdreiecks D.

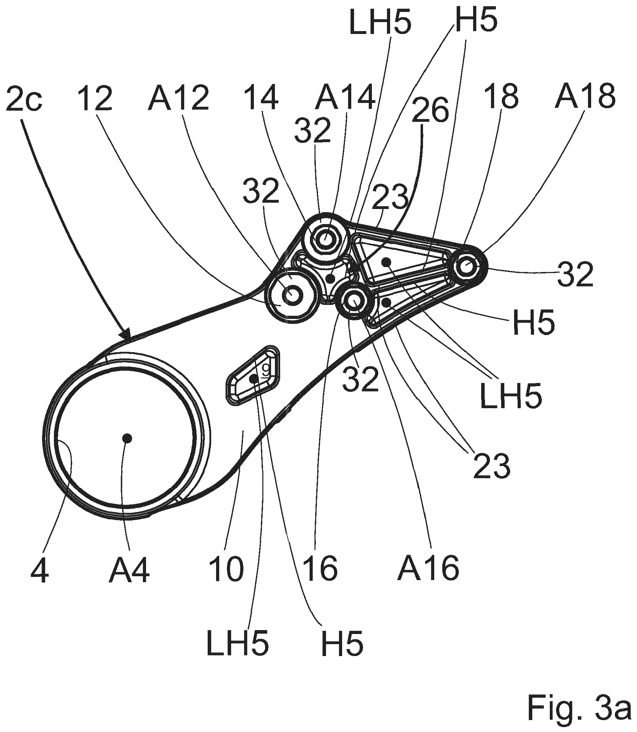

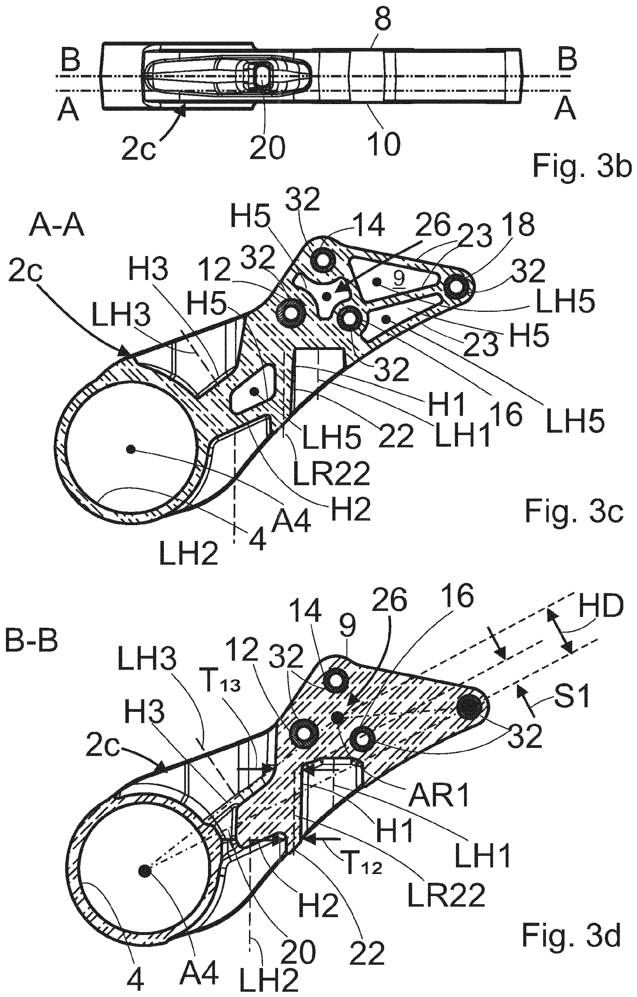

Zur Vermeidung von Wiederholungen sollen nachstehend vom dritten Figurensatz (Figuren 3a, 3b, 3c, 3d) lediglich die grundsätzlichen Unterschiede zum ersten Figurensatz beschrieben werden. Nicht beschriebene Merkmale sollen gleichsam als offenbart und beschrieben gelten.

Der dritte Figurensatz (Figuren 3a, 3b, 3c, 3d) zeigt eine Haltestruktur 2c dritter Ausführung in verschiedenen Ansichten, welche nachstehend insgesamt beschrieben werden.

Die Haltestruktur 2c umfasst nun ein einziges Aufnahmeauge 4 mit Aufnahmeachse A4. Es sind zwar weiterhin vier Fixierstellen 12, 14, 16, 18 vorhanden, von welchen die Fixierstellen 12, 14 und 16 weiterhin die erste Fixiergruppe 26 mit resultierender Fixierachse AR1 ausbilden, jedoch sind die Aufnahmeachse A4, die Fixierachse AR1 und die Fixierachse A18 so zueinander angeordnet, dass sich bei Verbindung dieser drei Achsen A4, A19, AR1 ein recht flaches Verbindungsdreieck D mit geringer Höhe HD ergibt.

Die Haltestruktur 2c weist nunmehr nur drei Hohlräume H1, H2, H3 bzw. Wandungshohlräume und vier Paare von sich bezüglich der Innenwandung 9 gegenüberliegenden Hohlräumen H5 bzw. Querungshohlräumen auf. Die Abflussöffnung 20 ist ausgebildet zwischen den Hohlräumen H2 und H3. Der Hohlraum H1 weist die längste Einragestrecke S1 auf, wobei S1 etwa die halbe Höhe HD des Verbindungsdreiecks D beträgt.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

- 2a, 2b, 2c: Haltestruktur
- 4: Aufnahmeauge
- 6: Aufnahmeauge
- 8: Wandung
- 9: Innenwandung
- 10: Wandung
- 12: Fixierstelle
- 14: Fixierstelle
- 16: Fixierstelle
- 18: Fixierstelle
- 20: Abflussöffnung
- 22: Rippe
- 23: Rippe
- 24: Rippe
- 26: Fixiergruppe
- 28: Fixiergruppe
- 32: Fixierhülse

- A4: Aufnahmeachse
- A6: Aufnahmeachse
- A12: Fixierachse
- A14: Fixierachse
- A16: Fixierachse
- A18: Fixierachse
- AR1: resultierende Fixierachse
- AR2: resultierende Fixierachse
- D: Verbindungsdreieck
- E8: Ebene
- E9: Ebene
- E10: Ebene
- H1: Hohlraum
- H2: Hohlraum
- H3: Hohlraum
- H4: Hohlraum
- H5: Hohlraum
- HD: Höhe
- LH1: Längsrichtung
- LH2: Längsrichtung
- LH3: Längsrichtung
- LH4: Längsrichtung
- LH5: Längsrichtung
- LR22: Längsrichtung
- LR23: Längsrichtung
- LR24: Längsrichtung
- S1: Einragestrecke
- S2: Einragestrecke
- S3: Einragestrecke

## Patentansprüche

1. Haltestruktur (2a, 2b, 2c), umfassend
mindestens ein Aufnahmeauge (4, 6), welches eine zentrale Aufnahmeachse (A4, A6) aufweist, mindestens zwei Fixierstellen (12, 14, 16, 18), welche jeweils eine zentrale Fixierachse (A12, A14, A16, A18) aufweisen, die parallel zu der mindestens einen Aufnahmeachse (A4, A6) verläuft, eine erste Wandung (8) und eine zweite Wandung (10), die an gegenüberliegenden Seiten der Haltestruktur (2a, 2b, 2c) angeordnet sind, wobei die beiden Wandungen (8, 10) in Richtung der mindestens einen Aufnahmeachse (A4, A6) beabstandet sind, wobei sich das mindesten eine Aufnahmeauge (4, 6) von einer der Wandungen (8, 10) zur anderen Wandung (8, 10) erstreckt, wobei die Haltestruktur (2a, 2b, 2c) zudem zumindest einen Hohlraum (H1, H2, H3, H4) aufweist, der zwischen den Wandungen (8, 10) angeordnet ist, wobei drei Achsen, ausgewählt aus der Gruppe umfassend Aufnahmeachse(n) (A4, A6), Fixierachsen (A12, A14, A16, A18) und resultierende Fixierachse (AR1, AR2), mindestens ein Verbindungsdreieck (D) definieren, wobei der zumindest eine Hohlraum (H1, H2, H3) in das Verbindungsdreieck (D) einragt, und wobei die Einragestrecke (S1, S2, S3), über die der zumindest eine Hohlraum (H1, H2, H3) in das Verbindungsdreieck (D) einragt, im Bereich der 1,0-fachen bis 0,1-fachen Höhe (HD) des Verbindungsdreiecks (D) liegt, **dadurch gekennzeichnet, dass** zumindest eine der Fixierstellen (12, 14, 16, 18) von beiden Wandungen (8, 10) getragen ist.

2. Haltestruktur (2a, 2b, 2c) nach Anspruch 1, **dadurch gekennzeichnet, dass** zwischen den Wandungen (8, 10) zumindest eine Rippe (22, 24) angeordnet ist.

3. Haltestruktur (2a, 2b, 2c) nach Anspruch 1 oder 2, **dadurch gekennzeichnet, dass** drei Achsen, ausgewählt aus der Gruppe umfassend Aufnahmeachse(n) (A4, A6), Fixierachsen (A12, A14, A16, A18) und resultierende Fixierachse (AR1, AR2), mindestens ein Verbindungsdreieck (D) definieren, wobei der zumindest eine Hohlraum (H1, H2, H3) in das Verbindungsdreieck (D) in eine Richtung einragt, die senkrecht zu der zumindest einen Aufnahmeachse (A4, A6) ist.

4. Haltestruktur (2a, 2b, 2c) nach Anspruch 3, **dadurch gekennzeichnet, dass** die Einragestrecke (S1, S2, S3), über die der zumindest eine Hohlraum (H1, H2, H3) in das Verbindungsdreieck (D) einragt, vorzugsweise im Bereich der 0,9-fachen bis 0,1-fachen Höhe (HD) liegt, weiter bevorzugt im Bereich der 0,9-fachen bis 0,5-fachen Höhe (HD) liegt.

5. Haltestruktur (2a, 2b, 2c) nach einem der voranstehenden Ansprüche, **dadurch gekennzeichnet, dass** eine Mehrheit der Fixierstellen (12, 14, 16, 18), weiter bevorzugt alle der Fixierstellen (12, 14, 16, 18), von beiden Wandungen (8, 10) getragen sind.

6. Haltestruktur (2a, 2b, 2c) nach einem der voranstehenden Ansprüche, **dadurch gekennzeichnet, dass** zumindest eine Abflussöffnung (20) angeordnet ist, die fluidisch mit zumindest einem der Hohlräume (H1, H2, H3, H4) verbunden ist und zu einer Umgebung der Haltestruktur (2a, 2b, 2c) führt oder zu einem anderen der Hohlräume (H1, H2, H3, H4) führt.

7. Haltestruktur (2a, 2b, 2c) nach Anspruch 1 und 2 oder nach einem der voranstehenden Ansprüche in Kombination mit dem Anspruch 2, **dadurch gekennzeichnet, dass** die zumindest eine Rippe (22, 24) derart angeordnet ist, dass sie mindestens zwei der Hohlräume (H1, H2, H3) im Inneren des Verbindungsdreiecks (D) trennt und mindestens zwei der Hohlräume (H1, H2, H3) außerhalb des Verbindungsdreieck (D) trennt oder
die zumindest eine Rippe (22, 24) derart angeordnet ist, dass sie zwei der Hohlräume (H1, H2, H3) im Inneren des Verbindungsdreiecks (D) und außerhalb des Verbindungsdreiecks (D) trennt.

8. Haltestruktur (2a, 2b, 2c) nach Anspruch 2 oder nach einem der voranstehenden Ansprüche in Kombination mit Anspruch 2, **dadurch gekennzeichnet, dass** die zumindest eine Rippe (22, 24) die längste Seite des Verbindungsdreiecks (D) überragt.

9. Haltestruktur (2a, 2b, 2c) nach Anspruch 2 oder einem der voranstehenden Ansprüche in Kombination mit Anspruch 2, **dadurch gekennzeichnet, dass** die zumindest eine Rippe (22, 24) derart angeordnet ist, dass sie sich in Richtung auf eine der Fixierstellen (12, 14, 16, 18) oder auf eine von Fixierstellen (12, 14, 16, 18) gebildeten Fixiergruppe (26, 28) erstreckt.

10. Haltestruktur (2a, 2b, 2c) nach einem der voranstehenden Ansprüche, **dadurch gekennzeichnet, dass** sie einstückig ausgebildet ist, vorzugsweise als Gussteil.

## Claims

1. Retaining structure (2a, 2b, 2c) comprising at least one receiving eye (4, 6) having a central receiving axis (A4, A6), at least two fixing points (12, 14, 16, 18), each having a central fixing axis (A12, A14, A16, A18) running parallel to the at least one receiving axis (A4, A6), a first wall (8) and a second wall (10) arranged on opposite sides of the retaining structure (2a, 2b, 2c), wherein the two walls (8, 10) are spaced apart in the direction of the at least one receiving axis (A4, A6), wherein the at least one receiving eye (4, 6) extends from one of the walls (8, 10) to the other wall (8, 10), wherein the retaining structure (2a, 2b, 2c) also has at least one cavity (H1, H2, H3, H4) arranged between the walls (8, 10), wherein three axes selected from the group comprising receiving axis(es) (A4, A6), fixing axes (A12, A14, A16, A18) and resulting fixing axis (AR1, AR2), define at least one connecting triangle (D), wherein the at least one cavity (H1, H2, H3) protrudes into the connecting triangle (D), and wherein the protrusion distance (S1, S2, S3) over which the at least one cavity (H1, H2, H3) protrudes into the connecting triangle (D) is in the range of 1.0 times to 0.1 times the height (HD) of the connecting triangle (D), **characterised in that** at least one of the fixing points (12, 14, 16, 18) is supported by both walls (8, 10).

2. Retaining structure (2a, 2b, 2c) according to claim 1, **characterised in that** at least one rib (22, 24) is arranged between the walls (8, 10).

3. Retaining structure (2a, 2b, 2c) according to claim 1 or 2, **characterised in that** three axes selected from the group comprising receiving axis(es) (A4, A6), fixing axes (A12, A14, A16, A18) and resulting fixing axis (AR1, AR2) define at least one connecting triangle (D), wherein the at least one cavity (H1, H2, H3) protrudes into the connecting triangle (D) in a direction perpendicular to the at least one receiving axis (A4, A6).

4. Retaining structure (2a, 2b, 2c) according to claim 3, **characterised in that** the protrusion distance (S1, S2, S3) over which the at least one cavity (H1, H2, H3) protrudes into the connecting triangle (D) is preferably in the range of 0.9 to 0.1 times the height (HD), and more preferably in the range of 0.9 to 0.5 times the height (HD).

5. Retaining structure (2a, 2b, 2c) according to one of the preceding claims, **characterised in that** a majority of the fixing points (12, 14, 16, 18), more preferably all of the fixing points (12, 14, 16, 18), are supported by both walls (8, 10).

6. Retaining structure (2a, 2b, 2c) according to one of the preceding claims, **characterised in that** at least one drainage opening (20) is arranged, which is fluidically connected to at least one of the cavities (H1, H2, H3, H4) and leads to an environment of the retaining structure (2a, 2b, 2c) or to another of the cavities (H1, H2, H3, H4).

7. Retaining structure (2a, 2b, 2c) according to claims 1 and 2 or according to one of the preceding claims in combination with claim 2, **characterised in that** the at least one rib (22, 24) is arranged in such a way that it separates at least two of the cavities (H1, H2, H3) inside the connecting triangle (D) and separates at least two of the cavities (H1, H2, H3) outside the connecting triangle (D), or the at least one rib (22, 24) is arranged in such a way that it separates two of the cavities (H1, H2, H3) inside the connecting triangle (D) and outside the connecting triangle (D).

8. Retaining structure (2a, 2b, 2c) according to claim 2 or according to one of the preceding claims in combination with claim 2, **characterised in that** the at least one rib (22, 24) protrudes beyond the longest side of the connecting triangle (D).

9. Retaining structure (2a, 2b, 2c) according to claim 2 or one of the preceding claims in combination with claim 2, **characterised in that** the at least one rib (22, 24) is arranged such that it extends towards one of the fixing points (12, 14, 16, 18) or towards a fixing group (26, 28) formed by fixing points (12, 14, 16, 18).

10. Retaining structure (2a, 2b, 2c) according to one of the preceding claims, **characterised in that** it is formed in one piece, preferably as a cast part.

## Revendications

1. Structure de support (2a, 2b, 2c) comprenant au moins un œillet de réception (4, 6) qui présente un axe de réception central (A4, A6), au moins deux points de fixation (12, 14, 16, 18) qui présentent chacun un axe de fixation central (A12, A14, A16, A18) s'étendant parallèlement à l'au moins un axe de réception (A4, A6), une première paroi (8) et une deuxième paroi (10) qui sont disposées sur des côtés opposés de la structure de support (2a, 2b, 2c), les deux parois (8, 10) étant espacées dans la direction du au moins un axe de réception (A4, A6), le au moins un œillet de réception (4, 6) s'étendant d'une des parois (8, 10) à l'autre paroi (8, 10), la structure de support (2a, 2b, 2c) comportant en outre au moins une cavité (H1, H2, H3, H4) disposée entre les parois (8, 10), trois axes choisis dans le groupe comprenant le ou les axes de réception (A4, A6), les axes de fixation (A12, A14, A16, A18) et axe de fixation résultant (AR1, AR2), définissent au moins un triangle de liaison (D), dans lequel la au moins une cavité (H1, H2, H3) fait saillie dans le triangle de liaison (D), et dans lequel la distance de saillie (S1, S2, S3) sur laquelle la au moins une cavité (H1, H2, H3) dans le triangle de liaison (D), se situe dans la plage comprise entre 1,0 fois et 0,1 fois la hauteur (HD) du triangle de liaison (D), **caractérisé en ce qu'**au moins l'un des points de fixation (12, 14, 16, 18) est supporté par les deux parois (8, 10).

2. Structure de support (2a, 2b, 2c) selon la revendication 1, **caractérisée en ce qu'**au moins une nervure (22, 24) est disposée entre les parois (8, 10).

3. Structure de support (2a, 2b, 2c) selon la revendication 1 ou 2, **caractérisée en ce que** trois axes, choisis dans le groupe comprenant le ou les axes de réception (A4, A6), les axes de fixation (A12, A14, A16, A18) et l'axe de fixation résultant (AR1, AR2), définissent au moins un triangle de liaison (D), la au moins une cavité (H1, H2, H3) s'étendant dans le triangle de liaison (D) dans une direction perpendiculaire au au moins un axe de réception (A4, A6).

4. Structure de support (2a, 2b, 2c) selon la revendication 3, **caractérisée en ce que** la distance de saillie (S1, S2, S3) sur laquelle la au moins une cavité (H1, H2, H3) s'engage dans le triangle de liaison (D) est de préférence comprise entre 0,9 et 0,1 fois la hauteur (HD), et de préférence encore comprise entre 0,9 et 0,5 fois la hauteur (HD).

5. Structure de support (2a, 2b, 2c) selon l'une des revendications précédentes, **caractérisée en ce qu'**une majorité des points de fixation (12, 14, 16, 18), de préférence tous les points de fixation (12, 14, 16, 18), sont supportés par les deux parois (8, 10).

6. Structure de support (2a, 2b, 2c) selon l'une des revendications précédentes, **caractérisée en ce qu'**au moins une ouverture d'écoulement (20) est disposée, qui est reliée de manière fluidique à au moins l'une des cavités (H1, H2, H3, H4) et mène à un environnement de la structure de support (2a, 2b, 2c) ou à une autre des cavités (H1, H2, H3, H4).

7. Structure de support (2a, 2b, 2c) selon les revendications 1 et 2 ou selon l'une des revendications précédentes en combinaison avec la revendication 2, **caractérisée en ce que** la au moins une nervure (22, 24) est disposée de telle sorte qu'elle sépare au moins deux des cavités (H1, H2, H3) à l'intérieur du triangle de liaison (D) et sépare au moins deux des cavités (H1, H2, H3) à l'extérieur du triangle de liaison (D) ou la au moins une nervure (22, 24) est disposée de telle sorte qu'elle sépare deux des cavités (H1, H2, H3) à l'intérieur du triangle de liaison (D) et à l'extérieur du triangle de liaison (D).

8. Structure de support (2a, 2b, 2c) selon la revendication 2 ou selon l'une des revendications précédentes en combinaison avec la revendication 2, **caractérisée en ce que** la au moins une nervure (22, 24) dépasse du côté le plus long du triangle de liaison (D).

9. Structure de support (2a, 2b, 2c) selon la revendication 2 ou l'une des revendications précédentes en combinaison avec la revendication 2, **caractérisée en ce que** la au moins une nervure (22, 24) est disposée de telle sorte qu'elle s'étend en direction de l'un des points de fixation (12, 14, 16, 18) ou vers un groupe de fixation (26, 28) formé par des points de fixation (12, 14, 16, 18).

10. Structure de support (2a, 2b, 2c) selon l'une des revendications précédentes, **caractérisée en ce qu'**elle est réalisée d'un seul tenant, de préférence sous forme de pièce moulée.
